# EUROPÄISCHE PATENTSCHRIFT

(11) **EP 2 161 401 B1**
(45) Veröffentlichungstag und Bekanntmachung des Hinweises auf die Patenterteilung: **04.11.2015**
(21) Anmeldenummer: 09011292.1
(22) Anmeldetag: 03.09.2009
(51) Int. Cl.: E05F 15/632, E05F 15/643, F16G 3/00

(54) **Anordnung zur Verbindung eines Zugmittels mit einem Mitnehmerelement**
Assembly for connecting a pulling element with an attachment element
Agencement de liaison d'un moyen de traction et d'un élément d'entraîneur

(30) Priorität: 08.09.2008 DE 102008046061
(43) Veröffentlichungstag der Anmeldung: 10.03.2010
(73) Patentinhaber: DORMA Deutschland GmbH, 58256 Ennepetal (DE)
(72) Erfinder: Liebscher, Arne, 58313 Herdecke (DE); Finke, Andreas, 58285 Gevelsberg (DE)
(74) Vertreter: Balder IP Law, S.L.

(56) Entgegenhaltungen:
- EP-A2- 0 543 523
- DE-C1- 4 414 065

## Beschreibung

Die vorliegende Erfindung richtet sich auf eine Anordnung zur Verbindung eines Zugmittels mit einem Mitnehmerelement eines entlang eines Verfahrwegs bewegbaren Schiebeflügels, wobei das Zugmittel vorzugsweise mit einer Zahnstruktur ausgeführt ist.

Zugmittel können unterschieden werden in reibschlüssig wirkende Zugmittel, wie Keilriemen, Rippenriemen und dergleichen, und formschlüssig wirkende Zugmittel wie beispielsweise Zahnriemen. Bei formschlüssig wirkenden Zugmitteln greifen die Zähne in eine zugeordnete Zahnstruktur in den Antriebs- oder Umlenkmitteln ein, so dass ein Schlupf zwischen einem Antriebsrad zum Antrieb des Zugmittels und dem Zugmittel selbst verhindert wird, da eine formschlüssige Kraftübertragung erfolgt.

In Abhängigkeit der Anwendung des Zahnriemens läuft dieser entweder dauerhaft um, beispielsweise um die Drehbewegung zwischen zwei Wellen zu übertragen, oder der Zahnriemen führt eine Bewegung mit ständiger Umkehr der Bewegungsrichtung aus, beispielsweise um ein Mitnehmerelement zwischen zwei Endpositionen linear zu verfahren. Für solche Anwendungen ergibt sich die Forderung, eine kraftübertragende Verbindung zwischen dem Zahnriemen und dem Mitnehmerelement zu schaffen.

Bislang bekannte Anordnungen zur Bildung einer kraftübertragenden Verbindung zwischen einem Zugmittel und einem Mitnehmerelement basieren auf dem Prinzip, das Zugmittel zwischen zwei Plattenelementen zu klemmen, indem die Plattenelemente miteinander verschraubt werden. Dabei wird die Verschraubung unter Umständen durch das Zugmittel hindurch vorgenommen, so dass dieses durch den Schraubendurchgang beschädigt oder wenigstens hinsichtlich der Zugfestigkeit geschwächt wird. Die aus derartigen bekannten Anordnungen resultierenden Probleme betreffen insbesondere die Bildung einer Schwachstelle im Zugmittel, wobei durch Lösen der Verbindung, beispielsweise bei einem Umsetzen der Position des Mitnehmerelementes auf eine andere Position entlang des Zugmittels, der festigkeitsverminderte Schraubendurchgang zurückbleibt. Die so gebildete Schwachstelle führt häufig zu dem Erfordernis, das Zugmittel auszutauschen.

Eine derartige Anordnung zur Bildung einer kraftübertragenden Verbindung zwischen einem Zugmittel mit einer Zahnstruktur und einem Mitnehmerelement findet bei Schiebetüren mit einem automatischen Antrieb und/oder bei mehrflügeligen Schiebetüren Anwendung. Die Schiebetür weist entlang eines Verfahrweges bewegbare Flügel auf, die an einem Laufwagen aufgenommen sind. Der Antrieb der Laufwagen erfolgt über einen Zahnriemen, wobei zwischen dem Zahnriemen und dem Mitnehmerelement eine Anordnung zur Bildung einer kraftübertragenden Verbindung erforderlich ist. Bislang bekannte Verbindungsanordnungen beruhen auf verschraubten Klemmplatten, zwischen denen das Zugmittel hindurch verläuft, wobei Schraubelemente vorgesehen sind, die sich durch Durchgangsbohrungen im Zugmittel selbst erstrecken. Nach dem Lösen der kraftübertragenden Verbindung ist häufig ein Austausch der Zugmittel notwendig.

Derartige Zahnriemenverbinder sind beispielsweise aus DE4414065C1, welches Dokument die Merkmale des Oberbegriffs des Anspruchs 1 offenbart, oder EP0543523A2 bekannt

Es ist daher die Aufgabe der vorliegenden Erfindung, eine Anordnung zur Bildung einer kraftübertragenden Verbindung zwischen einem Zugmittel und einem Mitnehmerelement zu schaffen, die die vorgenannten Nachteile überwindet und insbesondere eine Verbesserung der Anordnung ohne Schädigung des Zugmittels ermöglicht.

Diese Aufgabe wird ausgehend von einer Anordnung zwischen einem Zugmittel und einem Mitnehmerelement gemäß dem Oberbegriff des Anspruches 1 in Verbindung mit dessen kennzeichnendem Merkmal gelöst. Vorteilhafte Weiterbildungen der Erfindungen sind in den abhängigen Ansprüchen angegeben.

Die Erfindung schließt die technische Lehre ein, dass die erfindungsgemäße Anordnung zur Verbindung eines Zugmittels mit einem Mitnehmerelement eine Klemmplatte aufweist, die mit dem Zugmittel kraft- oder formschlüssig in Mitnehmereingriff steht. Die Anordnung weist ferner ein Halteelement auf, das die vorgenannten Teile der Anordnung mit dem Mitnehmerelement in Mitnehmereingriff hält. Dadurch ist eine besonders einfache aufgebaute und mit wenigen Mitteln auskommende Anordnung geschaffen. Da ein Halteelement vorgesehen ist, dass die Klemmplatte und das Zugmittel kraft- oder formschlüssig in Mitnehmereingriff hält, kann insbesondere auf das Zugmittel zerstörende Vorrichtungen, wie Schrauben, verzichtet werden.

Vorzugsweise weist das Zugmittel eine Zahnstruktur auf. Die Klemmplatte weist eine geometrische Formschlussstruktur auf, mit der das Zugmittel (1) derart in Überdeckung gebracht ist, dass die Zahnstruktur (3) des Zugmittels (1) in die Formschlussstruktur zumindest in Erstreckungsrichtung des Zugmittels im Bereich der Klemmplatte in dem Fall formschlüssig eingreift. Der Vorteil der erfindungsgemäßen Anordnung einer Klemmplatte mit einer geometrischen Formschlussstruktur ist wiederum eine schraubfreie und damit in Bezug auf das Zugmittel zerstörungsfreie Verbindung zwischen dem Zugmittel und dem Mitnehmerelement, und eine Durchgangsbohrung im Zugmittel selbst ist nicht weiter erforderlich. Das Prinzip der kraftübertragenden Verbindung beruht im Wesentlichen auf dem Eingriff der Zahnstruktur des Zugmittels in die Formschlussstruktur der Klemmplatte, so dass die Klemmplatte lediglich in Überdeckung mit dem Zugmittel gebracht werden muss. Das Halteelement muss also lediglich die Klemmplatte und das Zugmittel in Position halten, aber nicht den Kraftschluss gewährleisten.

Vorzugsweise ist das Zugmittel als Zahnriemen ausgebildet, der typischerweise quer zur Längsrichtung des Riemens verlaufende Zähne mit einer Breite aufweist, die der Breite des Zugmittels entspricht. Die Zähne weisen untereinander einen Zahnabstand auf, der von Zahn zu Zahn gleich ausgebildet ist. Die Formschlussstruktur ist erfindungsgemäß an die geometrische Ausformung der Zahnstruktur des Zahnriemens angepasst, so dass die Zähne des Zahnriemens in die Formschlussstruktur der Klemmplatte eingesetzt werden können. Die Formschlussstruktur der Klemmplatte ist dabei mittels Schlitzen oder Vertiefungen gebildet. Wird in Längsrichtung in das Zugmittel eine Kraft eingeleitet, so kann diese durch die Verzahnung zwischen der Zahnstruktur und der Formschlussstruktur vom Zugmittel auf die Klemmplatte übertragen werden. Die Klemmplatte kann über eine beliebig ausgeführte Verbindung mit dem Mitnehmerelement gekoppelt werden, so dass die Übertragung hoher Kräfte zwischen dem Zugmittel und dem Mitnehmerelement ermöglicht ist.

Eine besonders vorteilhafte Ausführung des Zugmittels kann in einem Zahnriemen gesehen werden, wobei auch Keilriemen mit einer kombinierten Zahnstruktur bekannt sind, mit denen die erfindungsgemäße Anordnung zur Bildung der Verbindung zu einem Mitnehmerelement möglich ist. Die Formschlussstruktur der Klemmplatte umfasst wenigstens einen Schlitz bzw. eine Vertiefung, wobei in Abhängigkeit der verfügbaren Länge zur Klemmung des Zugmittels bis zu 20 oder mehr dieser Schlitze oder Vertiefungen vorgesehen sein können. Bevorzugt sind dies jedoch 5 bis 10 und besonders bevorzugt 8.

Im Falle der Vertiefungen sind diese vorzugsweise beidseitig der Klemmplatte ausgebildet. Dadurch ist es irrelevant, mit welcher Seite die Klemmplatte am Zahnriemen anliegt, was die Montage erleichtert.

Die Klemmplatte kann als einzelnes Element ausgeführt sein, wobei diese auch aus einem Teil des Mitnehmerelementes gebildet werden kann. Folglich kann die Formschlussstruktur in einem Teilbereich des Mitnehmerelementes eingebracht werden, der in Überdeckung mit dem Zugmittel gebracht werden kann.

Die Verbindung zwischen dem Mitnehmerelement und der Klemmplatte sieht vor, dass eine (zusätzliche) Formschlussgeometrie zwischen dem Mitnehmerelement und der Klemmplatte ausgebildet ist. Hierfür besitzt bevorzugt die Klemmplatte Federanformungen, die zum Eingriff in korrespondierende Nutgeometrien vorgesehen sind, die im Mitnehmerelement an entsprechenden Stellen eingebracht sind. Das Mitnehmerelement kann als Blechbauteil durch Stanz- und Biegeverfahren hergestellt sein und ein L-förmiges Winkelelement bilden. Die Klemmplatte kann drei Federanformungen besitzen, wobei innenseitig in der Kehle des L-förmigen Winkelelementes entsprechend drei Nutgeometrien ausgebildet sind. Wird die Klemmplatte an den bevorzugt kurzen Schenkel des L-förmigen Winkelelementes angelegt, so können die Federanformungen in Richtung zur Kehle des L-förmig gebogenen Winkelelementes weisen. Sind die Nutgeometrien in der Kehle eingebracht, ragen die Federanformungen in die Nutgeometrien ein, und es kommt zu einer formschlüssigen Verbindung zwischen der Klemmplatte und dem Mitnehmerelement zumindest in Mitnahmerichtung, d. h. in Richtung Längserstreckung des Zugmittels im Bereich des Mitnehmerelements. Folglich muss lediglich die Klemmplatte auf dem kurzen Schenkel des L-förmigen Winkelelementes in einer planparallelen Anordnung gehalten werden, wobei sich das Zugmittel zwischen der Klemmplatte und dem kurzen Schenkel des Winkelelementes erstreckt. Folglich ist eine einfache Klemmung der Klemmplatte, des Mitnehmerelements und des dazwischen verlaufenden Zugmittels erforderlich, um die erfindungsgemäße Anordnung zur kraftübertragenden Verbindung zu schaffen.

Um die Klemmplatte, das Zugmittel und wenigstens einen Bereich des Mitnehmerelementes in einer aufeinander liegenden Anordnung zu klemmen, ist ein Klammerelement vorgesehen, das seitlich auf die Anordnung aufgeschoben wird.

Das Klammerelement besitzt einen U-förmigen Querschnitt und besteht aus einem Blechelement, das mittels Stanz- und Biegeverfahren hergestellt ist. Das U ist in Richtung Mitnehmerelement offen. Durch die federelastische Nachgiebigkeit des Klammerelementes kann dieses auf die Paketanordnung aus Klemmplatte, Zugmittel und Mitnehmerelement aufgeschoben werden und in der Klemmposition einrasten. Hierfür besitzt das Klammerelement Rastanformungen um das Klammerelement am Mitnehmerelement im aufgeschobenen Zustand verliersicher zu verrasten. Die Rastanformungen bilden einen Formschluss mit dem Mitnehmerelement, wobei die Rastanformungen von der Außenseite des L-förmigen Winkelelementes in die Nutgeometrien einrasten. Diese Rastposition wird erst erreicht, wenn das Klammerelement vollständig auf die Paketanordnung, bestehend aus der Klemmplatte, dem Zugmittel und dem kurzen Schenkel des L-förmigen Winkelelementes, geschoben ist. Dadurch wird die Betriebssicherheit der Anordnung erhöht. Gemäß einem weiteren vorteilhaften Ausführungsbeispiel dient die erfindungsgemäße Anordnung zur Bildung einer kraftübertragenden Verbindung zwischen einem Mitnehmerelement zur Anordnung an einem Laufwagen für die Aufnahme eines Flügels einer automatischen Schiebetüre, wobei der Flügel über das Zugmittel entlang eines Verfahrweges beweglich ist. Automatische Schiebetüren werden mit Zugmitteln ausgeführt, die in Richtung des Verfahrweges der Flügel aufgespannt sind. Wird das Zugmittel in Bewegung versetzt, so bewegt sich ein erster Trum des Zugmittels in eine erste Richtung, wohingegen sich der zweite Trum in der der ersten Richtung entgegengesetzten zweiten Richtung bewegt.

Im Falle einer zweiflügeligen Schiebetüre sind sowohl am ersten Trum als auch am zweiten Trum jeweils ein Mitnehmerelement mit dem Zugmittel verbunden, und die Mitnehmerelemente sind an jeweiligen Laufwagen angebracht, die zur Aufnahme der Flügel der Schiebetüre dienen. Bei einem umlaufenden Zugmittel bewegen sich folglich die Flügel der Schiebetüre entweder aufeinander zu oder voneinander weg. Die vorliegende erfindungsgemäße Anordnung zur Bildung einer kraftübertragenden Verbindung zwischen dem Zugmittel und dem Mitnehmerelement eignet sich in besonderer Weise für den Antrieb von Laufwagen, wie sie in automatischen Schiebetüren bekannt sind. Besonders vorteilhaft ist die erfindungsgemäße Anordnung zur Befestigung des Mitnehmerelementes an einer beliebigen Stelle auf dem Zugmittel. Die Zugänglichkeit der Verbindungsstelle zwischen dem Mitnehmerelement und dem Zugmittel erfordert lediglich die Möglichkeit, das Klammerelement auf die Anordnung von Mitnehmerelement, Zugmittel und Klemmplatte aufzudrücken und einzuschnappen. Gleichermaßen kann auf besonders einfache Weise das Klammerelement wieder entfernt werden, beispielsweise um einen Flügel in seiner Bewegungsfreiheit vom Zugmittel zu lösen.

Vorteilhafterweise ist die Klemmplatte wenigstens mittels eines Stanzverfahrens hergestellt, wobei die Formschlussstruktur im Fall der Schlitze durch ausgestanzte Bereiche in der Klemmplatte ausgebildet ist. Dies hat den Vorteil, dass die Klemmplatte mit beiden Seiten der so gebildeten Schlitzstruktur auf das Zugmittel aufgesetzt werden kann und trotzdem mit dem Zugmittel formschlüssig in Eingriff gelangt. Dies erleichtert die Montage, da ein Monteur nur beachten muss, dass die Klemmplatte mit der richtigen Seite in Richtung Mitnehmerelement weist. Wird die Klemmplatte durch ein Stanzverfahren hergestellt, so kann die Schlitzstruktur in die Klemmplatte eingebracht werden, indem fensterartige Schlitze aus der Klemmplatte ausgestanzt werden.

Eine alternative Fertigungsmöglichkeit besteht darin, dass die geometrische Formschlussstruktur in Gestalt von Vertiefungen in die Klemmplatte eingebracht wird, wobei die Vertiefungen mittels eines Prägeverfahrens, eines Gießverfahrens oder mittels eines spanenden Verfahrens in die Klemmplatte eingebracht werden.

Eine nachträgliche Kantenverrundung ist von Vorteil, um ein Einschneiden des Stanzbauteils in das Material des Zahnriemens zu vermeiden. Hingegen ist es vorteilhaft, die Formschlussstruktur in Form von Vertiefungen auszuführen, die nicht zwingend durch das gesamte Material der Klemmplatte hindurchragen. Hinreichend sind Vertiefungen, die derart bemessen sind, dass die Zähne des Zahnriemens vollständig in die Vertiefungen eingesetzt werden können. Somit können die Vertiefungen in das Material der Klemmplatte eingeprägt werden, wobei die Klemmplatte auch durch ein Gießverfahren oder mittels eines spanenden Verfahrens wie ein Fräsen oder dergleichen hergestellt werden kann. Ferner kann es von Vorteil sein, die Formschlussstruktur durch ein Stoßverfahren herzustellen.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Figur 1: die perspektivische Ansicht eines Ausführungsbeispiels zweier Anordnungen zwischen einem Zugmittel und einem jeweiligen Mitnehmerelement in der Trägereinheit einer automatischen Schiebetür, in der zwei Laufwagen aufgenommen sind, an denen das jeweilige Mitnehmerelement angeordnet ist;
- Figur 2: eine perspektivische Explosionsansicht der Anordnungen von Figur 1 zur Bildung einer kraftübertragenden Verbindung zwischen einem Zugmittel und einem jeweiligen Mitnehmerelement;
- Figur 3a: eine perspektivische Ansicht der in Figur 1 linken, montierten Anordnung zur kraftübertragenden Verbindung zwischen dem Zugmittel und dem Mitnehmerelement, wobei die Anordnung durch ein Klammerelement im montierten Zustand gehalten ist;
- Figur 3b: eine isometrische Ansicht der Anordnung gemäß der Figur 3a aus Blickrichtung der Längserstreckung des Zugmittels;
- Figur 3c: die Anordnung von Figur 3a in einer anderen perspektivischen Ansicht, ohne Klammerelement;
- Figur 3d: die Anordnung von Figur 3a in wiederum einer anderen perspektivischen Ansicht;
- Figur 4: eine perspektivische Ansicht des Klammerelementes und
- Figur 5: eine perspektivische Ansicht der Klemmplatte mit einer in dieser eingebrachten Schlitzstruktur.

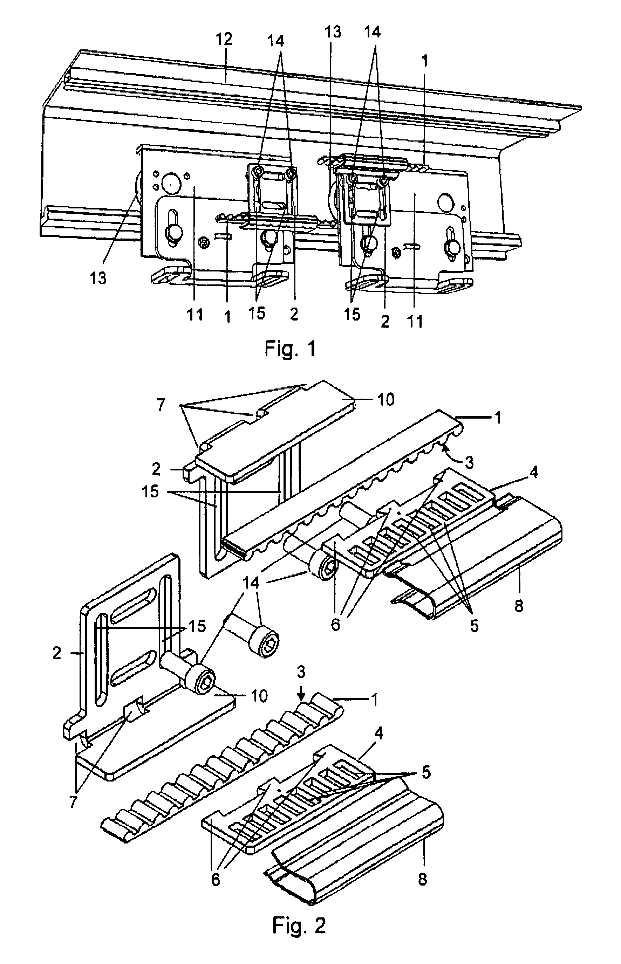

Figur 1 zeigt eine perspektivische Ansicht zweier Anordnungen jeweils einer kraftübertragenden Verbindung zwischen einem Zugmittel 1 und einem jeweiligen Mitnehmerelement 2, wobei die jeweilige Anordnung an einem ersten Laufwagen 11 bzw. an einem zweiten Laufwagen 11 vorgesehen ist. Die Laufwagen 11 sind innerhalb einer Trägereinheit 12 längsbeweglich über Laufrollen 13 geführt, wobei die Trägereinheit 12 den gebäudefesten Bestandteil einer automatischen Schiebetür darstellt. Die Schiebetür ist beispielhaft als zweiflügelige Schiebetür ausgebildet. Die Laufwagen 11 bewegen sich relativ zueinander, wobei das Zugmittel 1 nur ausschnittsweise gezeigt ist und außenseitig über jeweilige Umlenkrollen umgelenkt ist. Die linksseitig dargestellte Verbindung mit dem ersten Laufwagen 11 erfolgt im gezeigten Beispiel über einen unteren Trum des Zugmittels 1, das als Zahnriemen 1 ausgeführt ist, wohingegen die rechtsseitige Anordnung des Laufwagens 11 im Bereich des oberen Trums am Zugmittel 1 befestigt ist. Wird das Zugmittel 1 über die - nicht dargestellten - Umlenkrollen in Bewegung versetzt, so bewegen sich die Laufwagen 11 aufeinander zu oder voneinander weg. Um eine Verbindung zwischen den Mitnehmerelementen 2 zu den Laufwagen 11 zu schaffen, sind jeweilige Schraubelemente 14 vorgesehen. Die Mitnehmerelemente 2 besitzen Langlöcher 15, so dass eine Justage der Mitnehmerelemente 2 am Laufwagen 11 möglich ist und folglich eine variable Montage des Zugmittels 1 innerhalb der Trägereinheit 12 ebenfalls möglich wird.

Figur 2 zeigt eine perspektivische Explosionsansicht der Anordnungen von Figur 1 zur Bildung einer jeweiligen kraftübertragenden Verbindung zwischen einem Zugmittel 1 mit einer jeweiligen Zahnstruktur 3 und einem jeweiligen Mitnehmerelement 2. Die Mitnehmerelemente 2 sind bevorzugt als L-förmige Winkelelemente 2 ausgeführt und besitzen jeweils einen bevorzugt kurzen Schenkel 10. Erfindungsgemäß sind Klemmplatten 4 vorgesehen, die jeweils eine Formschlussstruktur 5 aufweisen, die in Gestalt von beispielhaft 8 Schlitzen ausgeführt ist, die parallel zueinander mit gleichbleibenden Abstand in die Klemmplatte 4 eingebracht sind. Die Klemmplatte 4 besitzt eine derartige längliche Erstreckung, dass die Klemmplatte 4 mit der Laufrichtung des Zugmittels 1 in Überdeckung gebracht werden kann.

Die geometrische Ausgestaltung und die Abstände innerhalb der Schlitzstruktur 5 sind derart bemessen, dass die Zahnstruktur 3 des Zugmittels 1 in die Schlitzstruktur 5 der Klemmplatte 4 zumindest in Mitnehmerrichtung eingreifen kann, d. h. in Richtung der Längserstreckung des Zugmittels 1 im Bereich der jeweiligen Klemmplatte 4. D. h. die Schlitze können in Richtung Mitnehmerelement 2 länger ausgeführt sein als die Zähne des Zugmittels 1 in diesem Bereich breit sind. Wird die jeweilige Klemmplatte 4 derart parallel zum kurzen Schenkel 10 des L-förmigen Winkelelementes 2 in Überdeckung gebracht und erstreckt sich das Zugmittel 1 zwischen dem kurzen Schenkel 10 und der Klemmplatte 4 hinweg, so kann das aus dem kurzen Schenkel 10, dem Zugmittel 1 und der Klemmplatte 4 gebildete Paket mittels eines jeweiligen Klammerelementes 8 aufeinander geklemmt werden. Die in das Zugmittel 1 eingeleitete Längskraft, d. h. die in Richtung Längserstreckung des Zugmittels 1 im Bereich der jeweiligen Klemmplatte 4 anliegende Kraft, kann über den geometrischen Formschluss zwischen der Zahnstruktur 3 des Zugmittels 1 und der Schlitzstruktur 5 der Klemmplatte 4 auf diese übertragen werden.

Um eine Übertragung der Kraft zwischen der Klemmplatte 4 und dem Mitnehmerelement 2 zu ermöglichen bzw. zu verbessern, ist bevorzugt im Mitnehmerelement 2 ebenfalls eine Formschlussstruktur diesmal in Form von Nutgeometrien 7 vorgesehen. Hierfür besitzt die Klemmplatte 4 Federanformungen 6, wobei die Nutgeometrien 7 bevorzugt in der Kehle des L-förmigen Winkelelements 2 ausgebildet sind, in die die Federanformungen 6 der Klemmplatte 4 einrasten bzw. in Mitnehmereingriff gelangen können. Wird nunmehr die Klemmplatte 4 parallel zum kurzen Schenkel 10 des Winkelelementes 2 angeordnet, so ragen die Federanformungen 6 in die Nutgeometrien 7 hinein, und der Formschluss zwischen der Klemmplatte 4 und dem Winkelelement 2 ist hergestellt. Folglich kann eine in das Zugmittel 1 eingebrachte Kraft auf das Winkelelement 2 übertragen werden. Das Klammerelement 8 besitzt einen U-förmigen Querschnitt, um ein seitliches Aufschieben des Klammerelementes 8 auf die Anordnung aus der Klemmplatte 4, dem Zugmittel 1 und dem kurzen Schenkel 10 des Mitnehmerelementes 2 zu ermöglichen. Das U ist somit in Richtung zugehöriges Mitnehmerelement 2 offen.

Wie in Figur 2 besonders gut erkennbar, sind die dargestellten zwei Anordnungen vorteilhafterweise mit identisch ausgebildeten Elementen gebildet, nur einmal um 180° rotiert. D. h. ein und dieselben Elemente sind sowohl geeignet, am oberen Trum als auch am unteren Trum des Zugmittels 1 befestigt zu werden. Dazu tragen vorteilhafterweise insbesondere auch die Langlöcher 15 bei. Aufgrund deren Länge können, wie besonders gut in Figur 1 zu erkennen, die Mitnehmerelemente 2 je nach Einbaulage mittels der Schraubelemente 14 immer korrekt montiert werden. D. h. die Langlöcher 15 haben eine Doppelfunktion. Aufgrund der identisch ausgebildeten Teile ist die Anordnung somit universell einsetzbar. Zudem wird die Anzahl verschiedenartig auszubildender Teile minimiert, was zumindest in Hinblick auf die notwendigen Herstellungswerkzeuge Kosten sparen hilft. Zudem ist die Montage vereinfacht, da ein Monteur bei der beispielhaften zweiflügeligen Schiebetür nicht darauf achten muss, welches beispielsweise Mitnehmerelement 2 er für den oberen oder den unteren Trum nehmen soll.

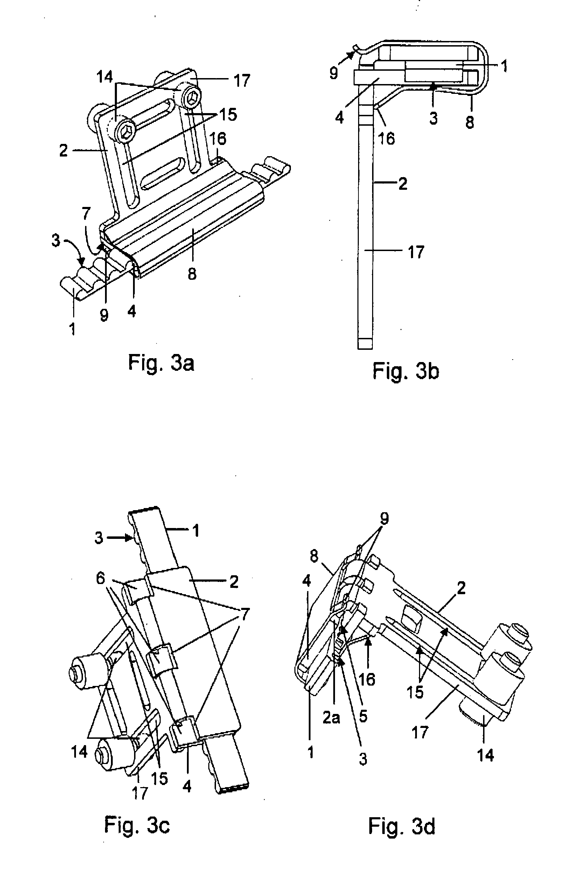

In den Figuren 3a bis 3d ist die in Figur 1 linke Anordnung aus dem Zugmittel 1, der Klemmplatte 4 und dem Mitnehmerelement 2 in montiertem Zustand dargestellt. Beispielhaft besitzt das Mitnehmerelement 2 Langlöcher 15, in die Schraubelemente 14 hindurch geführt sind, um das Mitnehmerelement 2 an einem weiteren Bauteil, beispielsweise einem Laufwagen, variabel zu befestigen. Das Zugmittel 1 erstreckt sich durch die Anordnung hindurch, wobei die Zahnstruktur 3 in Richtung zur Klemmplatte 4 weist, um in die in Figur 3d andeutungsweise erkennbare Formschlussstruktur 5 einzugreifen. Ferner ist in Figur 3c aufgrund des nicht dargestellten Klammerelements 8 erkennbar, dass die Klemmplatte 4 einen Formschluss mit dem Mitnehmerelement 2 über die Nutgeometrie 7 in Verbindung mit den Federanformungen 6 bildet. Das Klammerelement 8 besitzt Rastanformungen 9, um das Klammerelement 8 am Mitnehmerelement 2 im aufgeschobenen Zustand verliersicher zu verrasten. Dies ist besonders gut in Figur 3d zu erkennen. Die Rastanformungen 9 umschließen zumindest teilweise den Falzrücken 2a des L-förmigen Winkelelementes 2, das als Mitnehmerelement 2 ausgeführt ist. Durch die Federwirkung des Klammerelementes 8 kann dieses in die gezeigte Position einschnappen. Das Klammerelement 8 besitzt vorzugsweise ferner eine Anschlagkante 16, die gegen einen vorzugsweise langen Schenkel 17 des L-förmigen Winkelelementes 2 zur Anlage kommt und den Weg zum Aufschieben des Klammerelementes 8 begrenzt.

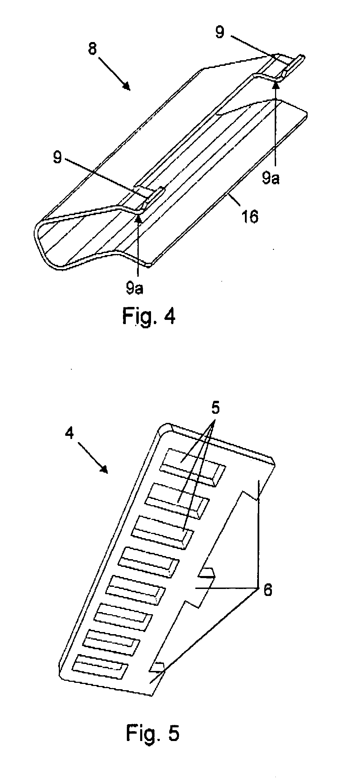

In der Figur 4 ist das Klammerelement 8 perspektivisch dargestellt, wobei auf der Unterseite der U-förmigen Struktur des aus einem Federblech durch Stanz- und Biegeoperation hergestellten Klammerelementes 8 die Anschlagkante 16 erkennbar ist. Auf dem gegenüberliegenden Schenkel der U-förmigen Geometrie des Klammerelementes 8 befinden sich bevorzugt außenseitig zwei Rastanformungen 9 zum Verrasten des Klammerelementes 8 auf der erfindungsgemäßen Anordnung. Die Verrastung erfolgt mittels der Anschlagkante 16 zugewandten Ausbuchtungen 9a der Rastanformungen 9.

Figur 5 zeigt eine perspektivische Ansicht der Klemmplatte 4 mit insgesamt 8 Schlitzen zur Bildung der Formschlussstruktur 5, die als Schlitzstruktur 5 ausgeführt ist. Auf der Formschlussseite für das Mitnehmerelement 2 besitzt die Klemmplatte 4 drei Federanformungen 6, die beispielhaft schwalbenschwanzartig endseitig auseinander laufen, um in den Nutgeometrien innerhalb des Mitnehmerelementes 2 zumindest in die vorgenannte Mitnehmerrichtung formschlüssig einzugreifen. Damit wird wirksam verhindert, dass das Zugmittel 1 auf dem kurzen Schenkel 10 des zugehörigen, nicht dargestellten Mitnehmerelements 2 verrutschen kann, da das Zugmittel 1 mit dem Mitnehmerelement 2 nicht zwangsläufig formschlüssig in Mitnehmereingriff stehen muss.

Die Klemmplatte 4 kann sowohl oberhalb als auch unterhalb des kurzen Schenkels 10 des Mitnehmerelements 2 angeordnet werden; das Klammerelement 8 muss dann nur entsprechend um 180° rotiert aufgeschoben werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

Beispielsweise können die Rastanformungen 9, 9 durchgehend ausgebildet sein, sodass sie zu einer Form ähnlich der Anschlagkante 16 führen.

Zusätzlich oder alternativ kann die Anschlagkante 16 unterbrochen sein, also nicht durchgehend ausgebildet sein.

Vorzugsweise weist die Klemmplatte 4 an der der vorgenannten Formschlussseite für das Mitnehmerelement 2 gegenüberliegenden, abgewandten Seite ebenfalls Federanformungen 6 auf. Dadurch ist es möglich, die Klemmplatte 4 auch horizontal um 180° in Figur 3b rotiert einzusetzen, was die Fehleranfälligkeit bei der Montage weiter senkt.

Ist zudem die Formschlussstruktur im Fall von ausgebildeten Vertiefungen, wie vorstehend beschrieben, an der Klemmplatte 4 nunmehr an beiden, einander abgewandten Seiten ausgebildet, ist die Klemmplatte 4 in jeder Einbaulage einsetzbar. Wichtig ist nur, dass die Schlitzstruktur 5 mit dem Zugmittel 1 in Eingriff gelangt.

Ferner kann die beschriebene Anordnung von Nutgeometrien 7 und Federanformungen 6 umgekehrt ausgebildet sein. D. h. in der Kehle des Winkelelements 2 sind Vorsprünge beispielsweise in Form von Versteifungen ausgebildet, die sich in Richtung Klemmplatte 4 erstrecken. Die Klemmplatte weist an der dem Winkelelement 2 zugewandten Seite Ausnehmungen auf, mit denen die Vorsprünge des Winkelelements 2 formschlüssig in Mitnehmereingriff gelangen.

Alternativ weist die Klemmplatte 4 sowohl Nutgeometrien 7 als auch Federanformungen 6 auf, wobei in dem Fall das Mitnehmerelement 2 korrespondierend ausgebildete Nutgeometrien 7 und Federanformungen 6 aufweist.

Gemäß dem vorstehend beschriebenen Ausführungsbeispiel ist die Formschlussstruktur 5 an einer Klemmplatte 4 ausgebildet. Sie kann jedoch genauso gut anstatt dessen oder zusätzlich an dem Mitnehmerelement 2 vorteilhafterweise am vorbeschriebenen kurzen Schenkel 10 ausgebildet sein. Dabei kann die Formschlussstruktur 5 an beiden flachen Seiten des Mitnehmerelements 2 bzw. dessen kurzen Schenkels 10 ausgebildet sein.

Auch wenn die Erfindung in Bezug auf eine zweiflügelige Schiebetür beschrieben wurde, ist sie für jede Art von zugmittelbasierter Türanlage einsetzbar, beispielsweise an Bogenschiebetüren, Kreisschiebetüren und Teleskopschiebetüren.

Im Ergebnis ist durch die Erfindung eine sehr sichere, universell einsetzbare, austauschbare und einfach handzuhabende, d. h. zu montierende Wirkverbindung zwischen einem Mitnehmerelement und einem Zugmittel geschaffen.

### Bezugszeichenliste

- 1: Zugmittel, Zahnriemen
- 2: Mitnehmerelement, L-förmiges Winkelelement
- 2a: Falzrücken
- 3: Zahnstruktur
- 4: Klemmplatte
- 5: Formschlussstruktur, Schlitzstruktur
- 6: Federanformung
- 7: Nutgeometrie
- 8: Klammerelement
- 9: Rastanformung
- 9a: Ausbuchtung
- 10: kurzer Schenkel
- 11: Laufwagen
- 12: Trägereinheit
- 13: Laufrolle
- 14: Schraubelement
- 15: Langloch
- 16: Anschlagkante
- 17: langer Schenkel

## Patentansprüche

1. Anordnung zur Verbindung eines Zugmittels (1), mit einem Mitnehmerelement (2) eines entlang eines Verfahrwegs bewegbaren Schiebeflügels,
das als L-förmiges Winkelement (2) ausgebildet ist, wobei die Anordnung ferner
• eine Klemmplatte (4) aufweist, die mit dem Zugmittel (1) kraft- oder formschlüssig in Mitnehmereingriff steht, wobei,
• die Anordnung ein Klammerelement (8) aufweist, mittels dessen die anderen Teile der Anordnung mit dem Mitnehmerelement (2) in dem kraft- oder formschlüssigen Mitnehmereingriff gehalten werden, indem die Klemmplatte (4), das Zugmittel (1) und das Mitnehmerelement (2) in einer aufeinander liegenden Anordnung von dem Klammerelement (8) geklemmt werden,
• wobei die Klemmplatte (4) und/oder das Mitnehmerelement (2) Federanformungen (6) aufweist, die in jeweils korrespondierende Nutgeometrien (7) eingreifen, die im Mitnehmerelement (2) bzw. in der Klemmplatte (4) eingebracht sind, **dadurch gekennzeichnet, dass**
• das Klammerelement (8) einen in Richtung des Mitnehmerelements (2) offenen U-förmigen Querschnitt aufweist, um ein seitliches Aufschieben des Klammerelementes (8) auf die Anordnung aus der Klemmplatte (4), dem Zugmittel (1) und dem Mitnehmerelement (2) zu ermöglichen, wobei das Klammerelement (8) mittels eines Stanz-Biegeverfahrens hergestellt ist und Rastanformungen (9) aufweist, die einen Formschluss mit dem Mitnehmerelement (2) bilden, wobei die Rastanformungen (9) von der Außenseite des L-förmiges Winkelelementes (2) in die Nutgeometrien (7) einrasten, um das Klammerelement (8) am Mitnehmerelement (2) im aufgeschobenen Zustand verliersicher zu verrasten, und
• das Zugmittel (1) und die Klemmplatte (4) in zueinander planparalleler Anordnung von dem Klammerelement (8) geklemmt werden.

2. Anordnung nach Anspruch 1, **dadurch gekennzeichnet, dass**
• das Zugmittel (1) mit einer Zahnstruktur (3) ausgeführt ist und
• die Klemmplatte (4) eine geometrische Formschlussstruktur aufweist, mit der das Zugmittel (1) derart in Überdeckung gebracht ist, dass die Zahnstruktur (3) des Zugmittels (1) in die Formschlussstruktur (5) zumindest in Erstreckungsrichtung des Zugmittels (1) im Bereich der Klemmplatte (4) formschlüssig eingreift.

3. Anordnung nach Anspruch 2, **dadurch gekennzeichnet, dass** das Zugmittel (1) als Zahnriemen (1) ausgebildet ist, wobei die Formschlussstruktur der Klemmplatte (4) mittels Schlitzen (5) oder Vertiefungen gebildet ist.

4. Anordnung nach Anspruch 3, **dadurch gekennzeichnet, dass** die Vertiefungen beidseitig der Klemmplatte (4) ausgebildet sind.

5. Anordnung nach einem der Ansprüche 2 bis 4, **dadurch gekennzeichnet, dass** die Formschlussstruktur wenigstens 1 bis 20, 5 bis 10 oder 8 Schlitze bzw. Vertiefungen aufweist.

6. Anordnung nach einem der Ansprüche 2 bis 5, **dadurch gekennzeichnet, dass** die Formschlussstruktur der Klemmplatte (4) wenigstens durch einen Teil des Mitnehmerelementes (2) gebildet ist.

7. Anordnung nach einem der vorgenannten Ansprüche, **dadurch gekennzeichnet, dass** das Mitnehmerelement (2) als L-förmiges Winkelelement (2) ausgebildet ist und einen Schenkel (10) aufweist, mit dem die Anordnung mit dem Mitnehmerelement (2) in Mitnehmereingriff gehalten wird.

8. Anordnung nach Anspruch 7, **dadurch gekennzeichnet, dass** das L-förmige Winkelelement (2) Nutgeometrien (7) und/oder Federanformungen und die Klemmplatte (4) Federanformungen (6) und/oder Nutgeometrien zum Eingriff in die Nutgeometrien (7) bzw. Federanformungen des Winkelelements (2) aufweist.

9. Anordnung nach Anspruch 8 wobei die Nutgeometrien (7) und/oder Federanformungen in einer Kehle des L-förmigen Winkelelementes (2) ausgebildet sind.

10. Anordnung nach einem der vorgenannten Ansprüche, **dadurch gekennzeichnet, dass** das Mitnehmerelement (2) zur Anordnung an einen Laufwagen (11) für die Aufnahme des Schiebeflügels ausgebildet ist, sodass der Schiebeflügel über das Zugmittel (1) entlang des Verfahrweges bewegbar ist.

11. Anordnung nach einem der vorgenannten Ansprüche und nach Anspruch 2, **dadurch gekennzeichnet, dass** die Klemmplatte (4) wenigstens mittels eines Stanzverfahrens hergestellt ist und die Schlitzstruktur (5) durch ausgestanzte Bereiche in der Klemmplatte (4) ausgebildet ist.

## Claims

1. An arrangement for connecting a traction means (1) to a catch element (2) along a displacement path of a movable sliding leaf, which element is configured as an L-shaped bracket element (2), wherein the arrangement furthermore includes
• a clamping plate (4), which is in non-positively or positively in a catch engagement with the traction means (1), wherein
• the arrangement includes a clamp element (8), by means of which the other parts of the arrangement are retained with the catch element (2) in the non-positive or positive catch engagement, in that the clamping plate (4), the traction means (1) and the catch element (2) are clamped in a superimposed arrangement by means of the clamp element (8),
• wherein the clamping plate (4) and/or the catch element (2) includes spring conformations (6), which engage with respective geometrical groove shapes (7), which are provided in the catch element (2) respectively in the clamping plate (4), **characterized in that**
• the clamp element (8), in the direction of the catch element (2), includes an open U-shaped cross-section, in order to allow for a lateral sliding on of the clamp element (8) onto the arrangement of the clamping plate (4), the traction means (1) and the catch element (2), wherein the clamp element (8) is manufactured in a stamping and bending process and includes latching conformations (9), which build a form closure with the catch element (2), wherein, from the outside of the L-shaped bracket element (2), the latching conformations (9) latch with the geometrical groove shapes (7), in order to latch the clamp element (8) at the catch element (2) in the slid-on condition in a captive manner, and the traction means (1) and the clamping plate (4) are clamped by the clamp element (8) in a plane parallel arrangement.

2. The arrangement according to claim 1, **characterized in that**
• the traction means (1) is configured with a toothed structure (3), and
• the clamping plate (4) includes a geometrical form closure structure with which the traction means (1) is brought into congruence in such a way that the toothed structure (3) of the traction means (1), at least in the direction of extension of the traction means (1), positively engages with the form closure structure (5) in the area of the clamping plate (4).

3. The arrangement of claim 2, **characterized in that** the traction means (1) is configured as a toothed belt (1), wherein the form closure structure of the clamping plate (4) is formed by means of slots (5) or depressions.

4. The arrangement according to claim 3, **characterized in that** the depressions are configured on both sides of the clamping plate (4).

5. The arrangement according to any of the claims 2 to 4, **characterized in that** the form closure structure includes at least 1 to 20, 5 to 10, or 8 slots respectively depressions.

6. The arrangement according to any of the claims 2 to 5, **characterized in that** the form closure structure of the clamping plate (4) is formed at least by a portion of the catch element (2).

7. The arrangement according to any of the aforementioned claims, **characterized in that** the catch element (2) is configured as an L-shaped bracket element (2) and includes a branch (10), by means of which the arrangement is retained with the catch element (2) in a catch engagement.

8. The arrangement according to claim 7, **characterized in that** the L-shaped bracket element (2) includes geometrical groove shapes (7) and/or spring conformations and the clamping plate (4) includes spring conformations and/or geometrical groove shapes for the engagement with the geometrical groove shapes (7), respectively the spring conformations of the bracket element (2).

9. The arrangement according to claim 8, wherein the geometrical shapes of the grove (7) and/or the spring conformations are configured in a channel of the L-shaped bracket element (2).

10. The arrangement according to any of the aforementioned claims, **characterized in that** the catch element (2) is configured for the arrangement at a carriage (11) for receiving the sliding leave such that the sliding leave is movable via the traction means (1) along the displacement path.

11. The arrangement according to any of the aforementioned claims and according to claim 2, **characterized in that** the clamping plate (4) is manufactured at least in a stamping process and the slotted structure (5) is configured by means of stamped areas in the clamping plate (4).

## Revendications

1. Agencement pour la connexion d'un moyen de traction (1) à un élément d'entraînement (2) d'un vantail coulissant déplaçable le long d'un chemin de déplacement, lequel élément est aménagé comme élément angulaire (2) en forme de L, dans lequel l'agencement comprend en plus
• une plaque de serrage (4), qui est en engagement d'entraînement par la force ou par la forme avec le moyen de traction (1), dans lequel
• l'agencement comprend un élément de serrage (8), au moyen duquel les autres pièces de l'agencement sont retenues avec l'élément d'entraînement (2) dans l'engagement d'entraînement par la force ou par la forme, en ce que la plaque de serrage (4), le moyen de traction (1) et l'élément d'entraînement (2) sont serrés par l'élément de serrage (8) en un agencement superposé,
• la plaque de serrage (4) et/ou l'élément d'entraînement (2) comprenant des conformations de ressorts (6), qui s'engagent respectivement dans des formes géométriques de rainures (7) qui sont ménagées dans l'élément d'entraînement (2) respectivement dans la plaque de serrage (4), **caractérisé en ce que**
• l'élément de serrage (8) présente une coupe transversale en forme de U ouvert dans la direction de l'élément d'entraînement (2), afin de permettre un glissement latéral de l'élément de serrage (8) sur l'agencement composé de la plaque de serrage (4), du moyen de traction (1) et de l'élément d'entraînement (2), l'élément de serrage (8) étant fabriqué par l'intermédiaire d'un procédé de découpage-refoulement et présentant des conformations d'encliquetage (9), qui forment une connexion par la forme dans l'élément d'entraînement (2), les conformations d'encliquetage (9) encliquètent avec les formes géométriques de rainures (7) depuis la face extérieure de l'élément angulaire (2) en forme de L, afin de verrouiller de façon captive l'élément de serrage (8) sur l'élément d'entraînement (2) dans la condition où il est encagé, et
• le moyen de traction (1) et la plaque de serrage (4) sont serrés dans un agencement parallèlement de plan par l'élément de serrage (8).

2. Agencement selon la revendication 1, **caractérisé en ce que**
• le moyen de traction (1) est aménagé avec une structure dentée (3), et
• la plaque de serrage (4) présente une structure géométrique de connexion par la forme avec laquelle le moyen de traction (1) est mis en congruence de telle façon que la structure dentée (3) du moyen de traction (1) s'engage au moins en direction d'extension du moyen de traction (1) dans la structure de connexion par la forme (5) dans la région de la plaque de serrage (4).

3. Agencement selon la revendication 2, **caractérisé en ce que** le moyen de traction (1) est aménagé comme courroie dentée (1), dans lequel la structure de connexion par la forme de la plaque de serrage (4) est aménagée au moyen de fentes (5) ou de dépressions.

4. Agencement selon la revendication 3, **caractérisé en ce que** les dépressions sont aménagées des deux côtés de la plaque de serrage (4).

5. Agencement selon l'une des revendications 2 à 4, **caractérisé en ce que** la structure de connexion par la forme présente au moins 1 à 20, 5 à 10 ou 8 fentes, respectivement dépressions.

6. Agencement selon l'une des revendications 2 à 5, **caractérisé en ce que** la structure de connexion par la forme de la plaque de serrage (4) est aménagé au moins par une partie de l'élément d'entraînement (2).

7. Agencement selon l'une des revendications précédentes, **caractérisé en ce que** l'élément d'entraînement (2) est aménagé comme élément angulaire (2) en forme de L et présente une branche (10), au moyen de laquelle l'agencement est retenu en engagement d'entraînement avec l'élément d'entraînement (2).

8. Agencement selon la revendication 7, **caractérisé en ce que** l'élément angulaire (2) en forme de L présente des formes géométriques de rainures (7) et/ou des conformations de ressorts et la plaque de serrage (4) présente des conformations de ressorts et/ou des formes géométriques de rainures pour l'engagement dans les formes géométriques de rainures (7) respectivement dans des conformations de ressorts de l'élément angulaire (2).

9. Agencement selon la revendication 8, dans lequel les formes géométriques de rainures (7) et/ou les conformations de ressorts sont aménagées dans un creux de l'élément angulaire (2) en forme de L.

10. Agencement selon l'une des revendications mentionnées ci-avant, **caractérisé en ce que** l'élément d'entraînement (2) est aménagé pour l'agencement sur un chariot de roulement (11) pour la réception du vantail coulissant de sorte que le vantail coulissant est déplaçable le long du chemin de déplacement par l'intermédiaire du moyen de traction (1).

11. Agencement selon l'une des revendications mentionnées ci-avant et selon la revendication 2, **caractérisé en ce que** la plaque de serrage (4) est fabriqué au moins au moyen d'un procédé de découpage et la structure de fentes (5) est aménagée par des régions découpées dans la plaque de serrage (4).
